# EUROPEAN PATENT SPECIFICATION

(11) **EP 4 295 626 B1**
(45) Date of publication and mention of the grant of the patent: **22.04.2026**
(21) Application number: 21707221.4
(22) Date of filing: 19.02.2021
(51) Int. Cl.: H04W 72/0453, H04W 16/14

(54) **ALLOCATION OF FREQUENCY DOMAIN RESOURCES FOR WIRELESS SENSING**
ZUWEISUNG VON FREQUENZBEREICHSRESSOURCEN FÜR DRAHTLOSE ERFASSUNG
ATTRIBUTION DE RESSOURCES DE DOMAINE FRÉQUENTIEL POUR LA DÉTECTION SANS FIL

(43) Date of publication of application: 27.12.2023
(73) Proprietor: Telefonaktiebolaget LM Ericsson (publ), 164 83 Stockholm (SE)
(72) Inventor: LOPEZ, Miguel, 170 69 Solna (SE); WILHELMSSON, Leif, 222 20 Lund (SE)
(74) Representative: Ericsson
(86) International application number: PCT/EP2021/054120
(87) International publication number: WO 2022/174911

(56) References cited:
- WO-A1-2021/030685
- US-A1- 2020 351 668
- US-A1- 2021 007 139

## Description

### TECHNICAL FIELD

The present disclosure relates generally to the field of radio resource allocation. More particularly, it relates to allocation of frequency domain resources for wireless sensing.

### BACKGROUND

Wireless sensing can be performed by detecting changes in a wireless propagation channel. To this end, a sensing receiver device (e.g., a wireless device or a radio access node) receives multiple physical layer packets transmitted by a sensing transmitter device (e.g., a wireless device or a radio access node), and performs measurements thereon. The measurements are used to detect and/or classify the occurrence of events.

Typical applications of wireless sensing include, but are not limited to, home security (e.g., intruder detection), control of home appliances (e.g., turning on/off lights in relation to resident location), health care (e.g., monitoring vital signs such as heart rate, breathing, etc.), and production surveillance (e.g., monitoring machines in a factory).

Examples of sensing measurements include, but are not limited to, received signal strength indicator (RSSI) measurements, channel state information (CSI) measurements (e.g., measuring the frequency response of the propagation channel), and channel estimation measurements.

Wireless sensing may be seen as an enhancement for radio technologies that have been designed primarily for communication. For example, the IEEE 802.11 Working Group has initiated the task group 802.11bf with the purpose of developing a standard amendment to support wireless sensing.

Exemplification of scenarios, problems, solutions, and advantages will be given herein using terminology associated with IEEE 802.11. It should be noted that this is not intended as limiting, but merely as illustrative. In fact, the same - or corresponding - scenarios, problems, solutions, and/or advantages may be equally relevant for other radio technologies (e.g., as standardized by the third generation partnership project, 3GPP; examples including sixth generation, 6G, applications).

To be able to sense movements in an environment, the movements should cause variations in the propagation channel between the sensing transmitter and the sensing receiver. Thus, it is possible to sense movements in an environment when the movements cause variations in the propagation channel between a sensing transmitter and a sensing receiver.

A problem is that movements that do not cause detectable variations in the sensed propagation channel between a sensing transmitter and a sensing receiver are not detected.

Therefore, there is a need for improved approaches for wireless sensing. Preferably, such approaches improve the movement detection probability.

It is known from the document US 2021007139 A1 about a method and apparatus for transmitting uplink information.

It is also known from the document US 2020351668 A1 about methods for providing frequency domain resource allocation schemes for use in unlicensed spectrum.

It is also known from the document WO 2021030685 A1 about methods and apparatuses for receive (Rx) beam selection.

### SUMMARY

It should be emphasized that the term "comprises/comprising" (replaceable by "includes/including") when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an arrangement is referred to herein, it is to be understood as a physical product; e.g., an apparatus. The physical product may comprise one or more parts, such as controlling circuitry in the form of one or more controllers, one or more processors, or the like. It is an object of some embodiments to solve or mitigate, alleviate, or eliminate at least some of the above or other disadvantages.

A first aspect is a method for allocating frequency domain resources for wireless sensing of a radio channel for enabling to sense movements in an environment, wherein the wireless sensing is performed by at least one sensing device. The method comprises determining a sensing frequency range for the at least one sensing device based on a multipath spread of the radio channel, and allocating frequency domain resources for the at least one sensing device at least on part based on the determined sensing frequency range.

In some embodiments, the multipath spread is parameterized based on (e.g., by) one or more of: a number of propagation paths of the radio channel, a time dispersiveness of the channel, an impulse response of the channel, a power delay profile of the channel, a delay spread of the channel, a root mean square delay spread of the channel, a frequency response of the channel, and a coherence bandwidth of the channel.

In some embodiments, the sensing frequency range comprises a sensing bandwidth and/or a sensing frequency spread.

In some embodiments, allocating frequency domain resources for the at least one sensing device at least in part based on the determined sensing frequency range comprises allocating a number of frequency domain resources and/or allocating a frequency domain resource span.

In some embodiments, allocating frequency domain resources for the at least one sensing device at least in part based on the determined sensing frequency range comprises allocating contiguous or non-contiguous frequency domain resources.

In some embodiments, the method further comprises determining the multipath spread of the radio channel.

In some embodiments, the method further comprises transmitting an indication of the allocated frequency domain resources to the at least one sensing device.

In some embodiments, the wireless sensing comprises sensing communication packets carrying data associated with the at least one sensing device, and allocating frequency domain resources for the at least one sensing device is further based on a resource need for the data.

In some embodiments, the frequency domain resources are orthogonal frequency division multiple access resources.

A second aspect is an apparatus for allocating frequency domain resources for wireless sensing of a radio channel for enabling to sense movements in an environment, wherein the wireless sensing is performed by at least one sensing device. The apparatus comprises controlling circuitry configured to cause determination of a sensing frequency range for the at least one sensing device based on a multipath spread of the radio channel, and allocation of frequency domain resources for the at least one sensing device at least in part based on the determined sensing frequency range.

In some embodiments, any of the above aspects may additionally have features identical with or corresponding to any of the various features as explained above for any of the other aspects.

An advantage of some embodiments is that improved approaches for wireless sensing are provided.

An advantage of some embodiments is that the movement detection probability is improved (e.g., increased). This advantage may be achieved through selecting the sensed frequency portion of the propagation channel in relation to a sensing frequency range, wherein the sensing frequency range may be relatively large for frequency selective propagation channels. Alternatively or additionally, this advantage may be achieved by allocation of non-contiguous frequency domain resources for sensing, which entails a relatively large sensing frequency range. Typically, a relatively large sensing frequency range results in a relatively high movement detection probability; at least on average.

An advantage of some embodiments is that frequency domain resources may be utilized more efficiently for wireless sensing. This may, in turn, increase capacity for data communication and/or enable an increase in sensing transmissions/measurements.

### BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.
Figure 1 is a schematic drawing illustrating an example scenario wherein some embodiments may be applicable;
Figure 2A is a flowchart illustrating example method steps according to some embodiments;
Figure 2B is a flowchart illustrating example method steps according to some embodiments;
Figure 3 is a signaling diagram illustrating example signaling according to some embodiments;
Figure 4 is a collection of schematic drawings illustrating example frequency domain allocations according to some embodiments;
Figure 5 is a plot illustrating example frequency selectivity according to some embodiments;
Figure 6 is a schematic block diagram illustrating an example apparatus according to some embodiments; and
Figure 7 is a schematic drawing illustrating an example computer readable medium according to some embodiments.

### DETAILED DESCRIPTION

As already mentioned above, it should be emphasized that the term "comprises/comprising" (replaceable by "includes/including") when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the embodiments set forth herein.

In the following, embodiments will be described where frequency domain resources are allocated for wireless sensing of respective radio channel(s) associated with at least one (e.g., one, two, two or more, or a plurality of) sensing device. The sensing device can be a sensing transmitter device or a sensing receiver device.

A typical example where some embodiments may be applicable is a scenario where a plurality of users (e.g., only sensing devices, or both sensing and non-sensing devices) share a frequency spectrum part (e.g., a frequency bandwidth). Such sharing of a frequency spectrum part may be accomplished by orthogonal frequency division multiple access (OFDMA), for example.

The IEEE 802.11 standard supports uplink (UL) and downlink (DL) OFDMA (introduced in IEEE 802.11ax), which is a multiplexing technique that enables multiple stations (STAs) with varying bandwidth needs to simultaneously receive or transmit, without causing interference to each other. In OFDMA, the AP allocates one or more sub-channels (commonly referred to as resource units; RUs) to each of the STAs. Since OFDMA enables the AP to schedule DL and UL transmissions, some possible benefits of OFDMA include reduced number of collisions, reduced latency, reduced overhead, and improved radio resource utilization.

As indicated above, OFDMA may also be advantageously used in relation to wireless sensing (e.g., enabling the AP to multiplex several sensing receivers and/or to simultaneously trigger multiple sensing transmitters).

As already mentioned, exemplification of scenarios, problems, solutions, and advantages will be given herein using terminology associated with IEEE 802.11, while being equally relevant for other radio technologies (e.g., as standardized by the third generation partnership project, 3GPP; examples including sixth generation, 6G, applications).

Generally, when an access point (AP) is referred to herein, it should be understood that any features and/or effects described as relating to the AP are equally applicable in relation to any other radio access node (e.g., a base station, BS; for example configured to operate in compliance with a suitable 3GPP standard, such as a 6G standard).

Also generally, when a station (STA) is referred to herein, is should be understood that any features and/or effects described as relating to the STA are equally applicable in relation to any other wireless device (e.g., a user equipment, UE; for example configured to operate in compliance with a suitable 3GPP standard, such as a 6G standard).

Also generally, when a network node is referred to herein, it should be understood to encompass a radio access node and/or a central (possibly cloud-based) node.

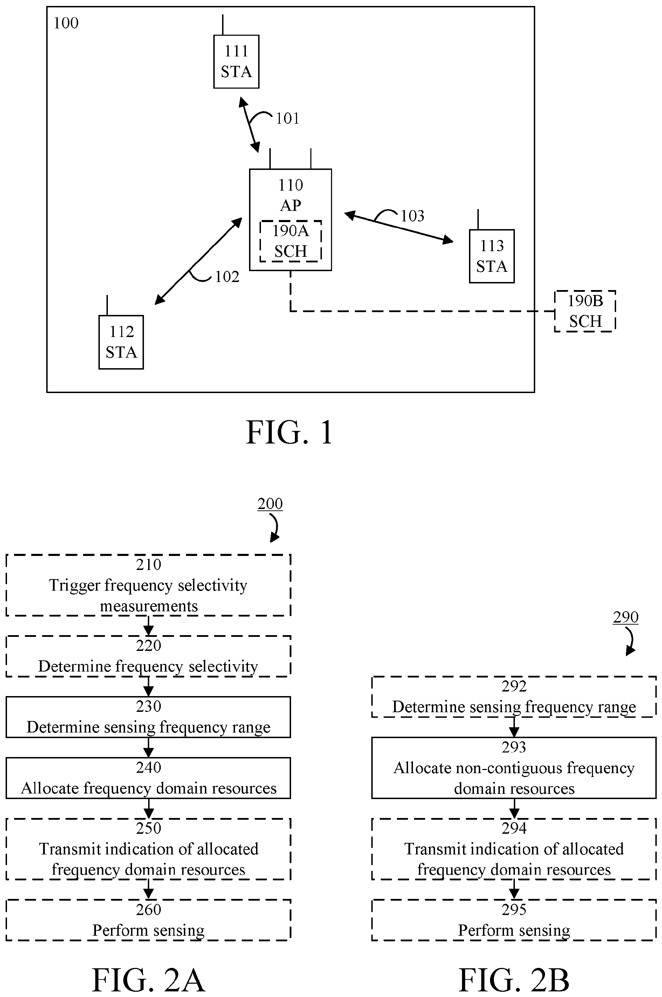

Figure 1 schematically illustrates an example scenario where sensing approaches according to some embodiments may be applicable.

The scenario of Figure 1 relates to an environment 100 (e.g., a building), which is to be partly or fully covered by wireless sensing. Within the environment 100, there is located an access point (AP) 110 and one or more stations (STA) 111, 112, 113.

A station 111, 112, 113 may be a sensing device (i.e., a sensing receiver device and/or a sensing transmitter device). Thus, when the AP 110 acts as a sensing transmitter device, the station 111, 112, 113 may be configured to perform sensing measurements in relation to a radio channel between the AP and the station 111, 112, 113 as illustrated by 101, 102, 103. Alternatively or additionally, when one or more station 111, 112, 113 acts as sensing transmitter device, the AP 110 may be configured to perform sensing measurements in relation to a radio channel between the sensing transmitter device station(s) and the sensing receiver device station as illustrated by 101, 102, 103. Yet alternatively or additionally, when one station (e.g., 112) acts as sensing transmitter device, other station(s) (e.g., 111, 113) may be configured to perform sensing measurements in relation to a radio channel between the sensing transmitter device station and the sensing receiver device station (not illustrated in Figure 1).

In some embodiments, a station 111, 112, 113 may - additionally or alternatively - be a wireless communication device; e.g., configured for wireless communication with the access point 110 in uplink and/or downlink.

A scheduler (SCH) 190A, 190B may be configured to schedule radio resources (e.g. frequency domain resources) for the stations 111, 112, 113, wherein the scheduled resources are for sensing and/or data communication.

The scheduler may be comprised in the AP 110 as illustrated by SCH 190A, or may be otherwise associated with (e.g., connected to) the AP 110 as illustrated by SCH 190B. In the latter case, the SCH 190B may be comprised in one of the STAs 111, 112, 113, or - typically - in a control node (e.g., a central network node, or a server node) within or external to the environment 100. In some embodiments, the SCH 190B is implemented within a cloud architecture.

Although not explicitly shown in Figure 1, a sensing coordination device may be configured to perform sensing coordination. In some embodiments, sensing coordination comprises one or more of: controlling sensing transmission and/or reception, controlling sensing reporting, collecting sensing measurement results, and analyzing sensing measurement results. The sensing coordination device may be comprised in (or otherwise associated with, e.g., connected to) the AP 110.

Generally, it should be noted that there are different scenarios for the sensing coordination device (the device that supports sensing). In one example, a sensing receiver device (i.e., a device configured to perform measurements used for wireless sensing) comprises the device that supports sensing. In one example, a sensing transmitter device (i.e., a device configured to transmit signals suitable for sensing measurements) comprises the device that supports sensing. In one example, the device that supports sensing is not comprised in any of the sensing receiver or transmitter devices.

In some embodiments, several sensing receiver devices may perform sensing measurements on the same transmitted packet. Thus, there may be joint sensing measurements performed by two or more sensing receiver devices using the same packet. This may reduce the overhead due to sensing compared to when a packet is used for sensing measurements by only one sensing receiver device.

Figure 2A illustrates an example method 200 according to some embodiments.

The method 200 is for allocating frequency domain resources for wireless sensing of a radio channel associated with a sensing device (i.e., at least one sensing device; e.g., one, two, two or more, or a plurality of, sensing device(s)).

A typical example where the method 200 may be applicable is a scenario where a plurality of users (e.g., only sensing devices, or both sensing and non-sensing devices) share a frequency spectrum part (e.g., a frequency bandwidth); e.g., using OFDMA. Thus, the frequency domain resources may be OFDMA resources.

For example, the method 200 may be performed by a scheduler (e.g., the scheduler 190A, 190B of Figure 1) and/or in a network node. The sensing device can be a sensing transmitter device or a sensing receiver device. For example, any of the STA(s) 111, 112, 113 may be the sensing device.

The steps illustrated in Figure 2A may be performed for one sensing device, for some sensing devices, or for each sensing device of a sensing scenario.

The method 200 comprises determining a sensing frequency range for the sensing device based on a frequency selectivity of the radio channel, as illustrated by step 230.

The frequency selectivity may, for example, be a measured frequency selectivity, an estimated frequency selectivity, or an expected frequency selectivity.

The frequency selectivity describes how much the radio channel varies over a collection of frequencies of interest (e.g., over the frequency spectrum part and/or over frequencies where sensing can be performed). When there is much variation in the radio channel, the frequency selectivity is considered as high. When there is little variation in the radio channel, the frequency selectivity is considered as low.

Channel variations may, for example, be expressed in terms of variations of received power (e.g., RSSI). Furthermore, channel variations may be defined in terms of one or more of: a magnitude difference over the collection of frequencies of interest, how much the magnitude changes between adjacent frequencies of interest, etc. In some embodiments, the frequency selectivity is expressed in terms of a magnitude variance value.

The frequency selectivity may be parameterized based on one or more of: a number of propagation paths of the radio channel (e.g., many paths indicating high selectivity), a time dispersiveness of the channel (e.g., high dispersiveness indicating high selectivity), an impulse response of the channel (e.g., long impulse response indicating high selectivity), a power delay profile of the channel (e.g., long power delay profile indicating high selectivity), a delay spread of the channel (e.g., high delay spread indicating high selectivity), a root mean square delay spread of the channel (e.g., high root mean square delay spread indicating high selectivity), a frequency response of the channel (e.g., highly varying frequency response indicating high selectivity), and a coherence bandwidth of the channel (e.g., small coherence bandwidth indicating high selectivity). For example, a frequency selectivity value may be provided by an equalizer or a channel estimator.

The sensing frequency range may be defined as a sensing bandwidth (e.g., a number of frequency resources for sensing) and/or as a sensing frequency spread (e.g., a frequency width over which frequency resources for sensing are to be spread out).

Determining the sensing frequency range for a sensing device based on the frequency selectivity of the radio channel may, typically, comprise determining a relatively large sensing frequency range when the frequency selectivity is relatively high, and determining a relatively small sensing frequency range when the frequency selectivity is relatively low. Thus, when a first frequency selectivity is higher than a second frequency selectivity, a first sensing frequency range determined for the first frequency selectivity may be larger than a second sensing frequency range determined for the second frequency selectivity.

For example, the sensing frequency range may be determined as a portion of the shared frequency spectrum part. The portion for a sensing device may be determined as a ratio between the frequency selectivity for the sensing devices and a frequency selectivity sum for all sensing devices of the sensing scenario.

The method 200 also comprises allocating frequency domain resources for the sensing device at least in part based on the determined sensing frequency range, as illustrated by step 240. A possible approach for the allocation is that the sensing device is allocated a fraction of the shared frequency spectrum part, wherein the fraction is related to the frequency selectivity. For example, the fraction may depend on (e.g., be equal to) the above-mentioned portion of the shared frequency spectrum part.

Step 240 may comprise allocating a number of frequency domain resources (e.g., depending on, or equal to, the sensing bandwidth of step 230; typically allocating a relatively high number of frequency domain resources when the sensing bandwidth is relatively high).

Alternatively or additionally, step 240 may comprise allocating a frequency domain resource span (e.g., depending on, or equal to, the sensing frequency spread of step 230; typically allocating a relatively large number of frequency domain resource span when the sensing frequency spread is relatively high).

Alternatively or additionally, step 240 may comprise allocating contiguous or non-contiguous frequency domain resources. When the sensing bandwidth is not less than the sensing frequency spread, contiguous frequency resources may be allocated. When the sensing bandwidth is less than the sensing frequency spread, non-contiguous frequency resources may be allocated. Alternatively or additionally, non-contiguous frequency domain resources may be allocated when there are not enough frequency domain resources available (e.g., on a system level) to accommodate the sensing frequency range using contiguous frequency domain resources.

The allocation may be performed under one or more further constraints in various embodiments. A few examples relate to sensing device bandwidth constraints, bandwidth granularity, and frequency resource granularity. Sensing device bandwidth constraints may, for example, be that the sensing device has a maximum bandwidth and/or a limited collection of bandwidths; over which it can perform sensing measurements and/or over which it can transmit a sensing packet. Granularity constraints for bandwidth and/or frequency resource may, for example, be that the system has a limited collection of allowed bandwidths (e.g., bandwidth part, BWP) and/or a specified frequency resource size (e.g., resource unit, RU).

In some embodiments, when the wireless sensing is performed on sensing communication packets carrying data to, or from, the sensing device, allocating frequency domain resources for the sensing device may be further based on a resource need for the data. For example, when there is a relatively high resource need for the data, a larger number of frequency domain resources may be allocated for the sensing device than motivated by the sensing frequency range of step 230. The resources need of the data may be determined in any suitable way (e.g., based on an amount of data in a transmission buffer and/or an applicable data rate).

As mentioned before, the method 200 may be for allocating frequency domain resources for wireless sensing of respective radio channels associated with a plurality of sensing devices. Then, the method 200 comprises determining a respective sensing frequency range for each of the plurality of sensing devices based on a respective frequency selectivity of the one or more respective radio channel (step 230), and allocating respective frequency domain resources for the plurality of sensing devices based on the determined respective sensing frequency ranges (step 240).

When using the method 200 for a plurality of sensing devices, step 240 may comprise allocating a respective number of frequency domain resources for each of the sensing devices (e.g., depending on, or in relation to, respective sensing bandwidths determined in step 230; typically allocating a relatively high number of frequency domain resources to sensing devices which a relatively high sensing bandwidth).

As mentioned above, the allocation may be performed under one or more further constraints in various embodiments.

In one example, a first sensing device may be allocated a number of frequency resources that is not less than its determined sensing bandwidth and that meets the one or more constraints, a second sensing device may be allocated a number of frequency resources that is not less than its determined sensing bandwidth and that meets the one or more constraints, and so on. The allocation may stop when all sensing devices have received an allocation of frequency resources. Alternatively or additionally, the allocation may stop when one sensing device is allocated a number of frequency resources that consists of the remaining (not yet allocated) frequency resources and that may be less than its determined sensing bandwidth. It should be noted that one or more sensing devices may be allocated no frequency resources for sensing. The order of allocation may be any suitable order of sensing devices. For example, the first sensing device may be one with lowest determined sensing bandwidth, and the order may correspond to successively increasing determined sensing bandwidth.

In one example, a first sensing device may be allocated a number of frequency resources that is not more than its determined sensing bandwidth and that meets the one or more constraints, a second sensing device may be allocated a number of frequency resources that is not more than its determined sensing bandwidth and that meets the one or more constraints, and so on. The allocation may stop when all sensing devices have received an allocation of frequency resources. Alternatively or additionally, the allocation may stop one sensing device is allocated a number of frequency resources that consists of the remaining (not yet allocated) frequency resources and that may be more than its determined sensing bandwidth. It should be noted that one or more sensing devices may be allocated no frequency resources for sensing. The order of allocation may be any suitable order of sensing devices. For example, the first sensing device may be one with lowest determined sensing bandwidth, and the order may correspond to successively increasing determined sensing bandwidth.

The method 200 may be for also allocating frequency domain resources for non-sensing devices (e.g., for data communication only). Thus, each of the frequency domain resources of the shared frequency spectrum part may be allocated to a sensing device or to a non-sensing device. In these cases, step 240 may further comprise allocating frequency domain resources for the non-sensing device(s) based on a resource need for the data. For example, the resource need for data of a non-sensing device may be handled similarly to (e.g., serve the same purpose as) the determined sensing bandwidth for a sensing device when executing step 240. Alternatively or additionally, resource need for data may be given higher, or lower, priority than resource need for sensing. Such priorities may be achieved by applying weight value(s) to either or both of the resource need for data and the determined sensing bandwidth before performing the allocation of step 240.

The method 200 may further comprise determining the frequency selectivity of the radio channel, as illustrated by optional step 220. The determination may be in accordance with any suitable method (e.g., using frequency selectivity measurements and/or one or more of the frequency selectivity parameters mentioned in connection with step 230).

The method 200 may further comprise triggering frequency selectivity measurements, as illustrated by optional step 210.

In one example, step 210 may comprise transmitting a triggering signal causing one or more of the sensing devices to perform frequency selectivity measurements, and step 220 may comprise receiving a signal indicting a result of the frequency selectivity measurements.

In one example, step 210 may comprise transmitting a triggering signal causing one or more of the sensing devices to send a response signal, and step 220 may comprise performing frequency selectivity measurements on the response signal, as received.

The method 200 may further comprise transmitting an indication of the allocated frequency domain resources to the sensing device(s) (and to the non-sensing device(s), as applicable), as illustrated by optional step 250. Step 250 may be performed in accordance with any suitable approach. For example step 250 may comprise multiplexing (e.g., using OFDMA) two or more devices (sensing device(s) and/or non-sensing device(s)) in the shared frequency spectrum part using respective allocated frequency resources.

The method 200 may further comprise performing sensing according to the allocation, as illustrated by optional step 260. Step 260 may be performed in accordance with any suitable approach. In one example, step 260 may comprise transmitting a sensing packet for sensing measurements by the sensing device(s), wherein the transmission is in at least the frequency domain resources allocated for the sensing device(s). In one example, step 260 may comprise performing sensing on sensing packet(s) received from the sensing device(s), wherein the sensing is performed in the frequency domain resources allocated for the sensing device(s).

Figure 2B illustrates an example method 290 according to some embodiments.

The method 290 is for allocating frequency domain resources for wireless sensing of a radio channel associated with a sensing device (i.e., at least one sensing device; e.g., one, two, two or more, or a plurality of, sensing device(s)).

A typical example where the method 290 may be applicable is a scenario where a plurality of users (e.g., only sensing devices, or both sensing and non-sensing devices) share a frequency spectrum part (e.g., a frequency bandwidth); e.g., using OFDMA. Thus, the frequency domain resources may be OFDMA resources.

For example, the method 290 may be performed by a scheduler (e.g., the scheduler 190A, 190B of Figure 1) and/or in a network node. The sensing device can be a sensing transmitter device or a sensing receiver device. For example, any of the STA(s) 111, 112, 113 may be the sensing device.

The steps illustrated in Figure 2B may be performed for one sensing device, for some sensing devices, or for each sensing device of a sensing scenario.

The method 290 comprises allocating non-contiguous frequency domain resources for the sensing device, as illustrated by step 293.

When the method 290 is for allocating frequency domain resources for wireless sensing of respective radio channels associated with a plurality of sensing devices, step 293 may comprise allocating respective non-contiguous frequency domain resources for the plurality of sensing devices.

Alternatively or additionally, step 293 may further comprise allocating contiguous, or non-contiguous, frequency domain resources for one or more non-sensing devices based on a respective resource need for data communication of the non-sensing devices.

In some embodiments, step 293 may comprise allocating the non-contiguous frequency domain resources for the sensing device based on sensing frequency range(s) of the sensing devices. In such embodiments, the method 290 may further comprise determining a sensing frequency range for the sensing device, as illustrated by optional step 292. Step 292 may correspond to step 230 of the method 200 (i.e., determining the sensing frequency range based on a frequency selectivity). Alternatively, the sensing frequency range may be independent of any frequency selectivity.

The sensing frequency range may be defined as a sensing bandwidth (e.g., a number of frequency resources for sensing) and/or as a sensing frequency spread (e.g., a frequency width over which frequency resources for sensing are to be spread out).

For example, the sensing frequency range may be determined as a portion of the shared frequency spectrum part.

A possible approach for the allocation in step 293 is that the sensing device is allocated a fraction of the shared frequency spectrum part. For example, the fraction may depend on (e.g., be equal to) the above-mentioned portion of the shared frequency spectrum part.

Step 293 may comprise allocating a number of frequency domain resources (e.g., depending on, or equal to, the sensing bandwidth of step 292; typically allocating a relatively high number of frequency domain resources when the sensing bandwidth is relatively high).

Alternatively or additionally, step 293 may comprise allocating a frequency domain resource span (e.g., depending on, or equal to, the sensing frequency spread of step 292; typically allocating a relatively large number of frequency domain resource span when the sensing frequency spread is relatively high).

The allocation may be performed under one or more further constraints in various embodiments. A few examples relate to sensing device bandwidth constraints, bandwidth granularity, and frequency resource granularity. Sensing device bandwidth constraints may, for example, be that the sensing device has a maximum bandwidth and/or a limited collection of bandwidths; over which it can perform sensing measurements and/or over which it can transmit a sensing packet. Granularity constraints for bandwidth and/or frequency resource may, for example, be that the system has a limited collection of allowed bandwidths (e.g., bandwidth part, BWP) and/or a specified frequency resource size (e.g., resource unit, RU).

In some embodiments, when the wireless sensing is performed on sensing communication packets carrying data to, or from, the sensing device, allocating frequency domain resources for the sensing device may be further based on a resource need for the data. For example, when there is a relatively high resource need for the data, a larger number of frequency domain resources may be allocated for the sensing device than motivated by the sensing frequency range of step 292. The resources need of the data may be determined in any suitable way (e.g., based on an amount of data in a transmission buffer and/or an applicable data rate).

As mentioned before, the method 290 may be for allocating frequency domain resources for wireless sensing of respective radio channels associated with a plurality of sensing devices. Then, the method 290 comprises allocating respective non-contiguous frequency domain resources for the plurality of sensing devices (step 293).

When using the method 290 for a plurality of sensing devices, step 293 may comprise allocating a respective number of frequency domain resources for each of the sensing devices (e.g., depending on, or in relation to, respective sensing bandwidths determined in step 292; typically allocating a relatively high number of frequency domain resources to sensing devices which a relatively high sensing bandwidth).

As mentioned above, the allocation may be performed under one or more further constraints in various embodiments.

The method 290 may further comprise transmitting an indication of the allocated frequency domain resources to the sensing device(s) (and to the non-sensing device(s), as applicable), as illustrated by optional step 294. Step 294 may be performed in accordance with any suitable approach. For example step 294 may comprise multiplexing (e.g., using OFDMA) two or more devices (sensing device(s) and/or non-sensing device(s)) in the shared frequency spectrum part using respective allocated frequency resources.

The method 290 may further comprise performing sensing according to the allocation, as illustrated by optional step 295. Step 295 may be performed in accordance with any suitable approach. In one example, step 295 may comprise transmitting a sensing packet for sensing measurements by the sensing device(s), wherein the transmission is in at least the frequency domain resources allocated for the sensing device(s). In one example, step 295 may comprise performing sensing on sensing packet(s) received from the sensing device(s), wherein the sensing is performed in the frequency domain resources allocated for the sensing device(s).

It should be note that, as suitable, any feature mentioned in connection with the method 200 may be combined with the method 290 and/or any feature mentioned in connection with the method 290 may be combined with the method 200.

It should be noted from the above, that some embodiments comprise allocating frequency domain resources for sensing by using allocation strategies that are different from those typically applied when allocating frequency domain resources for communication (e.g., data transmission).

Normally, scheduling/allocation for communication may be performed based on a resource need for transmitting data (e.g., indicated by an amount of data to be transmitted, transmitter buffer status, channel conditions, quality of service requirements, sensitivity to delay, etc.).

In some embodiments, the allocation strategies for sensing may comprise taking frequency selectivity of sensing device(s) into consideration, as exemplified above. Alternatively or additionally, the allocation strategies for sensing may comprise allocating non-contiguous frequency domain resources for sensing device(s), as exemplified above.

Some further exemplification of these principles will now be presented, wherein the term "multipath spread" is used to exemplify frequency selectivity. The multipath spread of a wireless channel may, for example, be quantified in terms of the delay spread.

The multipath channel may be characterized by its impulse response and/or by its frequency response. The delay characteristics of the channel may be summarized in a power delay profile, which represents the average power associated with each multipath delay. The power delay profile may be measured empirically, utilizing frequency and/or impulse response estimates (e.g., computed to equalize a received signal). Useful statistics summarizing the delay characteristics of a multipath channel include the root mean square (r.m.s.) delay spread *τᵣₘₛ* and the coherence bandwidth *B_{c}.* An approximation may be used to link the r.m.s. delay spread and the coherence bandwidth to each other. For example, a coherence bandwidth expression *B_{c} =* 1/5τ*ᵣₘₛ* is often used to estimate the range of frequencies over which the channel correlation is larger than 0.9. The r.m.s. delay spread is often used to describe the time spread of time dispersive radio channels. Any one or more of the above-mentioned parameters may be used to parameterize the multipath spread or the frequency selectivity.

The number of resolvable propagation paths typically increases as the channel bandwidth is increased. Thus, increasing the bandwidth typically improves the sensing receiver capability of detecting channel changes (e.g., due to movement) in a scenario with a prominent multipath channel; or with high frequency selectivity.

In an example implementation, the AP (e.g., 110 of Figure 1) determines the multipath spread of the channels (e.g., 101, 102, 103 of Figure 1) between itself and each sensing STA (e.g., 111, 112, 113 of Figure 1); compare with step 220 of Figure 2A. The AP may, for example, estimate a channel each time it receives a packet from a STA, and use the estimates to determine the multipath spread of the channel (e.g., parameterized by a delay spread derived from the channel estimates).

It may be noted that if - which is often the case - the AP is required to estimate the channel anyway, a measure of the multipath spread of the channel may be very easily achieved. For example, when a frequency response is determined in order to perform channel equalization, the corresponding impulse response is easily obtained by applying an inverse fast Fourier transform (FFT), and the r.m.s. delay spread may be determined therefrom.

In the example implementation, the AP then determines the sensing bandwidth needs for OFDMA transmission based on the multipath spread of the channels; compare with step 230 of Figure 2A. For example, the AP may use the coherence bandwidths of the channels to determine the sensing bandwidths.

Exemplifying further in a situation with four STAs (which can easily be generalized to an arbitrary number of STAs), it may be assumed that the STAs have the following corresponding estimated coherence bandwidths *B_{c}*(*n*), for example, where *n* = 1,2,3,4 indexes the STAs: *B_{c}*(1) *=* 2 *MHz, B_{c}*(2) = 0.5 *MHz, B_{c}*(3) *=* 10 *MHz, B_{c}*(4) = 15 *MHz.* Using the coherence bandwidths, the AP may determine the relative need for sensing bandwidth (e.g., acknowledging that a STA whose channel has a relatively small coherence bandwidth benefits from a relatively large sensing bandwidth allocation, and vice-versa). One solution is to determine the relative need for sensing bandwidth for a STA as inversely proportional to its coherence bandwidth. Thus, if the total bandwidth available (the shared frequency spectrum part) is *BW =* 160 MHz, the sensing bandwidth need *Bₛ*(*n*) of the n-th STA may be determined as *Bₛ*(*n*) *= BW*(1/*B_{c}*(*n*))/(1/*B_{c}*(1) *+* 1/*B_{c}*(2) *+* 1/*B_{c}*(3) *+* 1/*B_{c}*(4))*;* i.e., *Bₛ*(1) *= 30 MHz, Bₛ*(2) = 120 *MHz, Bₛ*(3) = 6 *MHz, Bₛ*(4) *=* 4 *MHz.* In an alternative, the sensing bandwidth need *Bₛ*(*n*) of the *n*-th STA may be determined as *Bₛ*(*n*) *= BW*(*τᵣₘₛ*(*n*))/(*τᵣₘₛ*(1) *+ τᵣₘₛ*(2) *+ τᵣₘₛ*(3) + *τᵣₘₛ*(4)).

In the example implementation, the AP then allocates the frequency domain resources for OFDMA transmission based on the sensing bandwidth need of each STA, under the constraints that the bandwidth supported by each STA and the granularity of the RU allocation supported by the AP are respected; compare with step 240 of Figure 2A.

For example, the frequency domain resource allocation may start with the STA having the smallest sensing bandwidth need and continue in increasing order of sensing bandwidth needs. Using this approach, the fourth STA in the above example should be allocated frequency domain resources first since it needs only 4 MHz for sensing. Then, the third, first, and second STAs should be allocated frequency domain resources (in that order) since they need 6, 30, and 120 MHz for sensing, respectively.

If all the STAs support up to 80 MHz channels, and the AP supports RU allocations in multiples of 20 MHz (i.e. 20, 40, 60, 80, 100, 120, 140, and 160 MHz), the fourth STA may be allocated 20 MHz (the smallest allocable amount which is not less than the sensing bandwidth need of 4 MHz), the third STA may be allocated 20 MHz (the smallest allocable amount which is not less than the sensing bandwidth need of 6 MHz), the first STA may be allocated 40 MHz (the smallest allocable amount which is not less than the sensing bandwidth need of 30 MHz), and the second STA may be allocated 80 MHz (the remaining portion of the shared frequency spectrum part of 160 MHz, which is less than the sensing bandwidth need of 120 MHz). Other alternatives are possible. For example, the fourth STA may be allocated 20 MHz, the third STA may be allocated 20 MHz, the first STA may be allocated 20 MHz, and the second STA may be allocated 100 MHz.

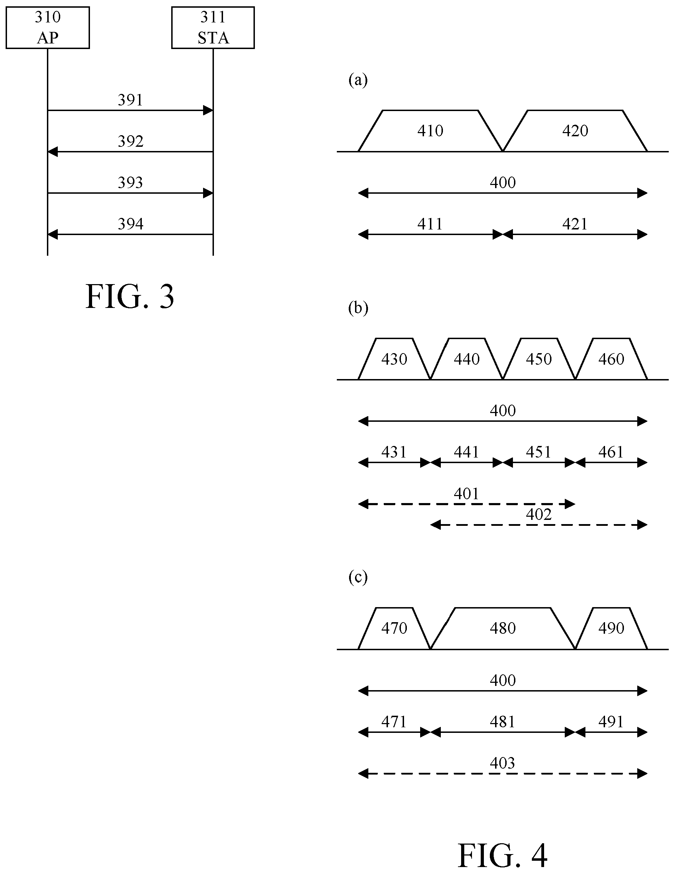

Figure 3 illustrates example signaling for sensing according to some embodiments. The signaling involves an AP 310 (compare with the AP 110 of Figure 1) and a STA, or a plurality of STAs, 311 (compare with any of the STAs 111, 112, 113 of Figure 1).

The AP 310 polls the STA(s) as illustrated by 391 (compare with step 210 of Figure 2A), and gets a poll response from the STA(s) 311 as illustrated by 392. The poll 391 may, for example, be implemented by transmission of a trigger frame. Then, the poll response 392 may be corresponding triggered transmission(s).

The AP 310 utilizes the poll response(s) 392 to determine the multipath spread of the channel for each STA (compare with step 220 of Figure 2A).

Then, the AP 310 determines the sensing bandwidth need of each STA (compare with step 230 of Figure 2A), allocates frequency domain resources to each STA accordingly (compare with step 240 of Figure 2A), and sends a trigger frame 393 scheduling the sensing transmissions (compare with step 250 of Figure 2A).

The STA(s) 311 and the AP 310 perform sensing (compare with step 260 of Figure 2A). In this example, the STA(s) 311 act as sensing transmitters, transmitting sensing packet(s) 394 in their allocated frequency domain resources.

Figure 4 illustrates some example frequency domain allocations according to some embodiments, to illustrate that allocation of non-contiguous frequency domain resources may be beneficial to increase the frequency resolution of channel estimates. Such principles may be applied only to sensing device(s) having a relatively high frequency selectivity, or to all sensing device(s) regardless of frequency selectivity.

Figure 4 illustrates a scenario where two STAs are to be multiplexed in a total bandwidth (a shared frequency spectrum part) 400 of 20 MHz.

In parts (a) and (b) of Figure 4, it is assumed that the coherence bandwidths of the channels of the two STAs are 8 MHz and 9 MHz, respectively, and that the AP can allocate resources in bandwidth parts of 5 MHz.

One possibility is to allocate 10 MHz contiguously to each STA. This is illustrated in part (a) of Figure 4, where the first STA gets the allocation 410 with a bandwidth 411 and the second STA gets the allocation 420 with a bandwidth 421.

Another possibility is to allocate 10 MHz non-contiguously to each STA. This is illustrated in part (b) of Figure 4, where the first STA gets the allocations 430 and 450 with 5 MHz bandwidths 431 and 451, respectively, and the second STA gets the allocations 440 and 460 with 5 MHz bandwidths 441 and 461, respectively. Thus, the first STA has a number of allocated frequency domain resources that correspond to the accumulation of the bandwidths 431 and 451, but has an allocated frequency domain resource span 401 of 15 MHz, which is larger than the accumulation of the bandwidths 431 and 451. Similarly, the second STA has a number of allocated frequency domain resources that correspond to the accumulation of the bandwidths 441 and 461, but has an allocated frequency domain resource span 402 of 15 MHz, which is larger than the accumulation of the bandwidths 441 and 461.

In both possibilities in parts (a) and (b) of Figure 4, 10 MHz is allocated to each STA, but the alternative in part (b) provides better frequency domain resolution due to the relatively large allocated frequency domain resource span.

In some applications, the scheduled OFDMA transmissions are used for sensing purposes only. In other applications, the transmissions may also involve communication of data. In the latter case, allocating frequency domain resources solely based on sensing bandwidth needs may lead to inferior performance for the data communication.

Then, the AP may take into account the frequency domain resource needs for both data communication and sensing; e.g., allocating an amount of frequency domain resources based on the needs for data communication and using non-contiguous frequency domain resources when the amount of frequency domain resources does not accommodate the needs for sensing. Thus, a STA with small coherence bandwidth (high need for sensing) and small bandwidth requirement for data (low need for data) may be allocated non-contiguous frequency domain resources.

This type of approach is illustrated in part (c) of Figure 4, where it is assumed that the first STA has a coherence bandwidth 8 MHz and a data communication need of 16 MHz, the second STA has a coherence bandwidth 2 MHz and a data communication need of 4 MHz, and that the AP can allocate resources in bandwidth parts of 2 MHz.

Based on the sensing needs, the second STA requires four times more frequency domain resources than the first STA. Based on the data communication needs on the other hand, the first STA requires four times more frequency domain resources than the second STA. A trade-off can be achieved by allocating less frequency domain resources to the second STA than motivated by the sensing needs, but making the allocation non-contiguous. This is illustrated in part (c) of Figure 4, where the first STA gets the allocation 480 with 16 MHz bandwidth 481, and the second STA gets the allocations 470 and 490 with 2 MHz bandwidths 471 and 491, respectively. Thus, the second STA has a number of allocated frequency domain resources that correspond to the accumulation of the bandwidths 471 and 491, but has an allocated frequency domain resource span 403 of 20 MHz, which is larger than the accumulation of the bandwidths 471 and 491. Thus, part (c) of Figure 4 illustrates an allocation approach which can enable adequate frequency resolution for sensing for both STAs while fulfilling the data communication needs.

It can be understood that a problem that an AP faces when using OFDMA for wireless sensing is that suitable criteria for frequency domain resource allocation for sensing do not coincide with (and is potentially conflicting with) suitable criteria for frequency domain resource allocation for data communication.

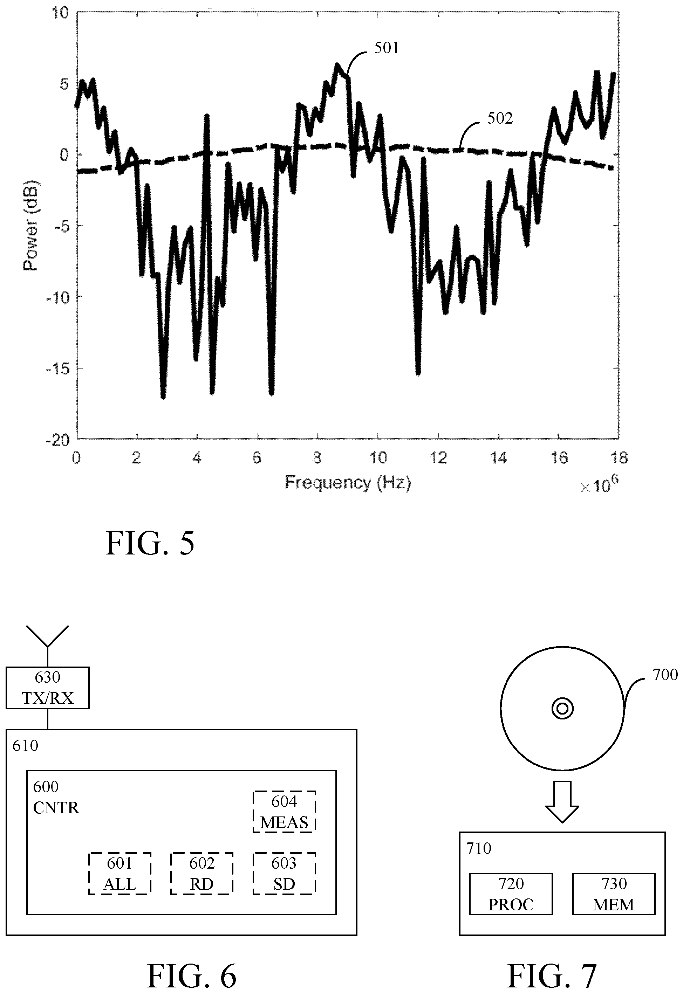

Figure 5 illustrates this problem by two examples of channels measured in an indoor office environment with a plurality of rooms along both sides of a corridor. The channels are between an AP and first and second STAs (STA1, STA2), respectively, wherein the channels have different frequency selectivity. STA1 is located in a different room than the AP (a couple of rooms down on the opposite side of the corridor), while STA2 is located in the same room as the AP. Thus, the channel for STA2 may be essentially a line of sight channel comprising a very strong direct ray, while the channel for STA1 may typically comprise wall attenuation and several multipath components.

A 20 MHz radio frequency channel between each STA and the AP was measured and the frequency responses are shown in Figure 5, where the x-axis shows frequency in Hz and the y-axis shows received power in dB (the channels have been normalized to have 0 dB average power). The channel for STA1 is illustrated by 501 and the channel for STA2 is illustrated by 502.

It can be seen that the channel represented by 502 is comparatively flat, while the channel represented by 501 comparatively frequency selective. Changes in the channel represented by 502 (e.g., due to a person walking between STA2 and the AP; blocking the direct ray) can be detected using a relatively small sensing bandwidth (e.g., 1 MHz); i.e., a sensing bandwidth that is narrower than the 20 MHz bandwidth. On the other hand, changes in the channel represented by 501 (e.g., due to a person blocking any of the rays of the channel between STA1 and the AP; walking along the corridor or moving inside one of the rooms in the vicinity), are more easily detected if a relatively large sensing bandwidth (e.g., the whole 20 MHz bandwidth) and/or a relatively high frequency resolution is used

This example illustrates that, when multiplexing STA1 and STA2 for sensing, it may be beneficial if the AP allocates the frequency domain resources as a function of the multipath spread of the channel. Typical allocation of frequency domain resources for data communication are designed to optimize various criteria related to the data transmission (e.g., throughput, latency, fairness, etc.) and may be inferior when allocating frequency domain resources for sensing.

Figure 6 schematically illustrates an example apparatus according to some embodiments. The apparatus is for (e.g., comprised, or comprisable, in) an allocation device 610 (e.g., a scheduler) and/or for allocating frequency domain resources for wireless sensing of a radio channel associated with at least one sensing device. For example, the apparatus may be configured to perform, or cause performance of, one or more of the method steps described in connection with Figure 2A and/or 2B.

The allocation device 610 may, for example, correspond to any of: the SCH 190A comprised in the AP 110 of Figure 1, or the SCH 190B associated with the AP 110 of Figure 1. Alternatively or additionally, the allocation device 610 may be comprised, or comprisable, in a network node (e.g., a radio access node or a central node). In some embodiments, a radio access node or a central node comprising the allocation device 610 may, in itself, be denoted as an allocation device.

The apparatus of Figure 6 comprises a controller (CNTR; e.g., controlling circuitry - such as a processor - or a control module) 600.

The controller 600 is configured to cause allocation of frequency domain resources for the sensing device; e.g., based on a sensing frequency range (compare with steps 240 and 293 of Figures 2A and 2B).

To this end, the controller 600 may comprise, or be otherwise associated with (e.g., connected, or connectable, to) an allocator (ALL; e.g., allocating circuitry or an allocation module) 601. The allocator 601 may be configured to allocate frequency domain resources for the sensing device.

The controller 600 may also be configured to cause determination of a sensing frequency range for the sensing device; e.g., based on a frequency selectivity of the radio channel (compare with steps 230 and 292 of Figures 2A and 2B).

To this end, the controller 600 may comprise, or be otherwise associated with (e.g., connected, or connectable, to) a range determiner (RD; e.g., range determining circuitry or a range determination module) 602. The range determiner 602 may be configured to determine the sensing frequency range for the sensing device.

The controller 600 may also be configured to cause determination of the frequency selectivity of the radio channel (compare with step 220 of Figure 2A).

To this end, the controller 600 may comprise, or be otherwise associated with (e.g., connected, or connectable, to) a selectivity determiner (SD; e.g., selectivity determining circuitry or a selectivity determination module) 603. The selectivity determiner 603 may be configured to determine the frequency selectivity of the radio channel.

The controller 600 may be further configured to cause transmission of an indication of the allocated frequency domain resources to the sensing device (compare with steps 250 and 294 of Figures 2A and 2B).

To this end, the controller 600 may comprise, or be otherwise associated with (e.g., connected, or connectable, to) a transmitter (e.g., transmitting circuitry or a transmission module), illustrated in Figure 6 as part of a transceiver (TX/RX) 630. The transmitter may be configured to transmit the indication of the allocated frequency domain resources to the sensing device.

The controller 600 may be further configured to cause triggering of frequency selectivity measurements (compare with step 210 of Figure 2A), for example, by causing transmission of a triggering signal.

To this end, the controller 600 may comprise, or be otherwise associated with (e.g., connected, or connectable, to) a transmitter (e.g., transmitting circuitry or a transmission module), illustrated in Figure 6 as part of a transceiver (TX/RX) 630. The transmitter may be configured to transmit the triggering signal.

The controller 600 may be further configured to cause performance of sensing according to the allocation (compare with steps 260 and 295 of Figures 2A and 2B).

In one example, the controller 600 may be configured to cause transmission of a sensing packet for sensing measurements by the sensing device(s), wherein the transmission is in at least the frequency domain resources allocated for the sensing device(s).

To this end, the controller 600 may comprise, or be otherwise associated with (e.g., connected, or connectable, to) a transmitter (e.g., transmitting circuitry or a transmission module), illustrated in Figure 6 as part of a transceiver (TX/RX) 630. The transmitter may be configured to transmit the sensing packet.

In one example, the controller 600 may be configured to cause performance of sensing on sensing packet(s) received from the sensing device(s), wherein the sensing is performed in the frequency domain resources allocated for the sensing device(s).

To this end, the controller 600 may comprise, or be otherwise associated with (e.g., connected, or connectable, to) a receiver (e.g., receiving circuitry or a reception module), illustrated in Figure 6 as part of a transceiver (TX/RX) 630, and a measurer (MEAS; e.g., measuring circuitry or a measurement module) 604. The receiver may be configured to receive sensing packet(s) and the measurer may be configured to perform sensing measurements.

It should be noted that any suitable features mentioned earlier (e.g., features described in connection with Figures 2A or 2B) may be equally applicable also for Figure 6, even if not explicitly mentioned in connection thereto.

The described embodiments and their equivalents may be realized in software or hardware or a combination thereof. The embodiments may be performed by general purpose circuitry. Examples of general purpose circuitry include digital signal processors (DSP), central processing units (CPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus such as a scheduler or a network node.

Embodiments may appear within an electronic apparatus (such as a scheduler or a network node) comprising arrangements, circuitry, and/or logic according to any of the embodiments described herein. Alternatively or additionally, an electronic apparatus (such as a scheduler or a network node) may be configured to perform methods according to any of the embodiments described herein.

According to some embodiments, a computer program product comprises a tangible, or non-tangible, computer readable medium such as, for example a universal serial bus (USB) memory, a plug-in card, an embedded drive or a read only memory (ROM). Figure 7 illustrates an example computer readable medium in the form of a compact disc (CD) ROM 700. The computer readable medium has stored thereon a computer program comprising program instructions. The computer program is loadable into a data processor (PROC; e.g., data processing circuitry or a data processing unit) 720, which may, for example, be comprised in a scheduler or a network node 710. When loaded into the data processor, the computer program may be stored in a memory (MEM) 730 associated with or comprised in the data processor. According to some embodiments, the computer program may, when loaded into and run by the data processor, cause execution of method steps according to, for example, any of the methods illustrated in Figures 2A and 2B, or otherwise described herein.

Generally, all terms used herein are to be interpreted according to their ordinary meaning in the relevant technical field, unless a different meaning is clearly given and/or is implied from the context in which it is used.

Reference has been made herein to various embodiments. However, a person skilled in the art would recognize numerous variations to the described embodiments that would still fall within the scope of the claims.

For example, the method embodiments described herein discloses example methods through steps being performed in a certain order. However, it is recognized that these sequences of events may take place in another order without departing from the scope of the claims. Furthermore, some method steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step.

In the same manner, it should be noted that in the description of embodiments, the partition lof functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer (e.g. a single) unit.

Any feature of any of the embodiments disclosed herein may be applied to any other embodiment, wherever suitable. Likewise, any advantage of any of the embodiments may apply to any other embodiments, and vice versa.

Hence, it should be understood that the details of the described embodiments are merely examples brought forward for illustrative purposes, and that all variations that fall within the scope of the claims are intended to be embraced therein.

## Claims

1. A method for allocating frequency domain resources for wireless sensing of a radio channel for enabling to sense movements in an environment, wherein the wireless sensing is performed by at least one sensing device, the method comprising:
determining (230) a sensing frequency range for the at least one sensing device based on a multipath spread of the radio channel; and
allocating (240) frequency domain resources for the at least one sensing device at least in part based on the determined sensing frequency range.

2. The method of claim 1, wherein the multipath spread is parameterized based on one or more of: a number of propagation paths of the radio channel, a time dispersiveness of the channel, an impulse response of the channel, a power delay profile of the channel, a delay spread of the channel, a root mean square delay spread of the channel, a frequency response of the channel, and a coherence bandwidth of the channel.

3. The method of any of claims 1 through 2, wherein the sensing frequency range comprises a sensing bandwidth and/or a sensing frequency spread.

4. The method of any of claims 1 through 3, wherein allocating frequency domain resources for the at least one sensing device at least in part based on the determined sensing frequency range comprises allocating a number of frequency domain resources and/or allocating a frequency domain resource span.

5. The method of any of claims 1 through 4, wherein allocating frequency domain resources for the at least one sensing device at least in part based on the determined sensing frequency range comprises allocating contiguous or non-contiguous frequency domain resources.

6. The method of any of claims 1 through 5, further comprising determining (220) the multipath spread of the radio channel.

7. The method of any of claims 1 through 6, further comprising transmitting (250) an indication of the allocated frequency domain resources to the at least one sensing device.

8. The method of any of claims 1 through 7, wherein the wireless sensing comprises sensing communication packets carrying data associated with the at least one sensing device, and wherein allocating frequency domain resources for the at least one sensing device is further based on a resource need for the data.

9. The method of any of claims 1 through 8, wherein the frequency domain resources are orthogonal frequency division multiple access resources.

10. An apparatus for allocating frequency domain resources for wireless sensing of a radio channel for enabling to sense movements in an environment, wherein the wireless sensing is performed by at least one sensing device, the apparatus comprising controlling circuitry (600) configured to cause:
determination of a sensing frequency range for the at least one sensing device based on a multipath spread of the radio channel; and
allocation of frequency domain resources for the at least one sensing device at least in part based on the determined sensing frequency range.

11. The apparatus of claim 10, wherein the multipath spread is parameterized based on one or more of: a number of propagation paths of the radio channel, a time dispersiveness of the channel, an impulse response of the channel, a power delay profile of the channel, a delay spread of the channel, a root mean square delay spread of the channel, a frequency response of the channel, and a coherence bandwidth of the channel.

12. The apparatus of any of claims 10 through 11, wherein the sensing frequency range comprises a sensing bandwidth and/or a sensing frequency spread.

13. The apparatus of any of claims 10 through 12, wherein the controlling circuitry is configured to cause allocation of frequency domain resources for the at least one sensing device at least in part based on the determined sensing frequency range by causing allocation of a number of frequency domain resources and/or allocation of a frequency domain resource span.

14. The apparatus of any of claims 10 through 13, wherein the controlling circuitry is configured to cause allocation of frequency domain resources for the at least one sensing device at least in part based on the determined sensing frequency range by causing allocation of contiguous or non-contiguous frequency domain resources.

15. The apparatus of any of claims 10 through 14, wherein the controlling circuitry is further configured to cause determination of the multipath spread of the radio channel.

16. The apparatus of any of claims 10 through 15, wherein the wireless sensing comprises sensing communication packets carrying data associated with the at least one sensing device, and wherein allocation of frequency domain resources for the at least one sensing device is further based on a resource need for the data.

## Patentansprüche

1. Verfahren zum Zuweisen von Frequenzbereichsressourcen zum drahtlosen Erfassen eines Funkkanals zum Ermöglichen eines Erfassens von Bewegungen in einer Umgebung, wobei das drahtlose Erfassen durch mindestens eine Sensorvorrichtung durchgeführt wird, wobei das Verfahren Folgendes umfasst:
Bestimmen (230) eines Erfassungsfrequenzbereichs für die mindestens eine Sensorvorrichtung basierend auf einer Mehrwegeausbreitung des Funkkanals; und
Zuweisen (240) von Frequenzbereichsressourcen für die mindestens eine Sensorvorrichtung, mindestens teilweise basierend auf dem bestimmten Erfassungsfrequenzbereich.

2. Verfahren nach Anspruch 1, wobei die Mehrwegeausbreitung basierend auf einer oder mehrerer der folgenden parametrisiert wird: einer Anzahl von Ausbreitungspfaden des Funkkanals, einer Zeitdispersion des Kanals, einer Impulsantwort des Kanals, eines Leistungsverzögerungsprofils des Kanals, einer Verzögerungsstreuung des Kanals, eines Effektivwerts der Verzögerungsstreuung des Kanals, eines Frequenzgangs des Kanals und einer Kohärenzbandbreite des Kanals.

3. Verfahren nach einem der Ansprüche 1 bis 2, wobei der Erfassungsfrequenzbereich eine Erfassungsbandbreite und/oder eine Erfassungsfrequenzstreuung umfasst.

4. Verfahren nach einem der Ansprüche 1 bis 3, wobei Zuweisen von Frequenzbereichsressourcen für die mindestens eine Sensorvorrichtung mindestens teilweise basierend auf dem bestimmten Erfassungsfrequenzbereich Zuweisen einer Anzahl von Frequenzbereichsressourcen und/oder Zuweisen einer Frequenzbereichsressourcenspanne umfasst.

5. Verfahren nach einem der Ansprüche 1 bis 4, wobei Zuweisen von Frequenzbereichsressourcen für die mindestens eine Sensorvorrichtung mindestens teilweise basierend auf dem bestimmten Erfassungsfrequenzbereich Zuweisen von zusammenhängenden oder nicht zusammenhängenden Frequenzbereichsressourcen umfasst.

6. Verfahren nach einem der Ansprüche 1 bis 5, ferner umfassend Bestimmen (220) der Mehrwegeausbreitung des Funkkanals.

7. Verfahren nach einem der Ansprüche 1 bis 6, ferner umfassend Übermitteln (250) einer Anzeige der zugewiesenen Frequenzbereichsressourcen an die mindestens eine Sensorvorrichtung.

8. Verfahren nach einem der Ansprüche 1 bis 7, wobei das drahtlose Erfassen Erfassen von Kommunikationspaketen umfasst, die Daten enthalten, die mit der mindestens einen Sensorvorrichtung verknüpft sind, und wobei Zuweisen von Frequenzbereichsressourcen für die mindestens eine Sensorvorrichtung ferner auf einem Ressourcenbedarf für die Daten basiert.

9. Verfahren nach einem der Ansprüche 1 bis 8, wobei die Frequenzbereichsressourcen orthogonale Frequenzmultiplex-Zugriffsressourcen sind.

10. Einrichtung zum Zuweisen von Frequenzbereichsressourcen für drahtloses Erfassen eines Funkkanals zum Ermöglichen eines Erfassens von Bewegungen in einer Umgebung, wobei das drahtlose Erfassen durch mindestens eine Sensorvorrichtung durchgeführt wird, wobei die Einrichtung eine Steuerschaltung (600) umfasst, die konfiguriert ist, Folgendes zu veranlassen:
Bestimmung eines Erfassungsfrequenzbereichs für die mindestens eine Sensorvorrichtung basierend auf einer Mehrwegeausbreitung des Funkkanals; und
Zuweisung von Frequenzbereichsressourcen für die mindestens eine Sensorvorrichtung, mindestens teilweise basierend auf dem bestimmten Erfassungsfrequenzbereich.

11. Einrichtung nach Anspruch 10, wobei die Mehrwegeausbreitung basierend auf einer oder mehrerer der Folgenden parametrisiert wird: einer Anzahl von Ausbreitungspfaden des Funkkanals, einer Zeitdispersion des Kanals, einer Impulsantwort des Kanals, eines Leistungsverzögerungsprofils des Kanals, einer Verzögerungsstreuung des Kanals, eines Effektivwerts der Verzögerungsstreuung des Kanals, eines Frequenzgangs des Kanals und einer Kohärenzbandbreite des Kanals.

12. Einrichtung nach einem der Ansprüche 10 bis 11, wobei der Erfassungsfrequenzbereich eine Erfassungsbandbreite und/oder eine Erfassungsfrequenzstreuung umfasst.

13. Einrichtung nach einem der Ansprüche 10 bis 12, wobei die Steuerschaltung so konfiguriert ist, dass sie Zuweisung von Frequenzbereichsressourcen für die mindestens eine Sensorvorrichtung mindestens teilweise basierend auf dem bestimmten Erfassungsfrequenzbereich durch Veranlassen einer Zuweisung einer Anzahl von Frequenzbereichsressourcen und/oder Zuweisen eines Frequenzbereichsressourcenbereichs veranlasst.

14. Einrichtung nach einem der Ansprüche 10 bis 13, wobei die Steuerschaltung so konfiguriert ist, dass sie Zuweisung von Frequenzbereichsressourcen für die mindestens eine Sensorvorrichtung mindestens teilweise basierend auf dem bestimmten Erfassungsfrequenzbereich durch Veranlassen einer Zuweisung von zusammenhängenden oder nicht zusammenhängenden Frequenzbereichsressourcen veranlasst.

15. Einrichtung nach einem der Ansprüche 10 bis 14, wobei die Steuerschaltung weiter dazu konfiguriert ist, Bestimmung der Mehrwegeausbreitung des Funkkanals zu veranlassen.

16. Einrichtung nach einem der Ansprüche 10 bis 15, wobei das drahtlose Erfassen Erfassen von Kommunikationspaketen umfasst, die Daten enthalten, die mit der mindestens einen Sensorvorrichtung verknüpft sind, und wobei Zuweisung von Frequenzbereichsressourcen für die mindestens eine Sensorvorrichtung ferner auf einem Ressourcenbedarf für die Daten basiert.

## Revendications

1. Procédé d'allocation de ressources dans le domaine fréquentiel pour la détection sans fil d'un canal radio permettant de détecter des mouvements dans un environnement, dans lequel la détection sans fil est réalisée par au moins un dispositif de détection, le procédé comprenant :
la détermination (230) d'une plage de fréquences de détection pour le ou les dispositifs de détection sur la base d'un étalement multitrajet du canal radio ; et
l'allocation (240) de ressources dans le domaine fréquentiel pour le ou les dispositifs de détection au moins en partie sur la base de la plage de fréquences de détection déterminée.

2. Procédé selon la revendication 1, dans lequel l'étalement multitrajet est paramétré sur la base d'un ou plusieurs parmi : un nombre de trajets de propagation du canal radio, une dispersivité temporelle du canal, une réponse impulsionnelle du canal, un profil de retard de puissance du canal, un étalement de retard du canal, un étalement de retard quadratique moyen du canal, une réponse fréquentielle du canal et une bande passante de cohérence du canal.

3. Procédé selon l'une quelconque des revendications 1 et 2, dans lequel la plage de fréquences de détection comprend une bande passante de détection et/ou une dispersivité de fréquence de détection.

4. Procédé selon l'une quelconque des revendications 1 à 3, dans lequel l'allocation de ressources dans le domaine fréquentiel pour le ou les dispositifs de détection au moins en partie sur la base de la plage de fréquences de détection déterminée comprend l'allocation d'un certain nombre de ressources dans le domaine fréquentiel et/ou l'allocation d'une plage de ressources dans le domaine fréquentiel.

5. Procédé selon l'une quelconque des revendications 1 à 4, dans lequel l'allocation de ressources dans le domaine fréquentiel pour le ou les dispositifs de détection au moins en partie sur la base de la plage de fréquences de détection déterminée comprend l'allocation de ressources dans le domaine fréquentiel contiguës ou non contiguës.

6. Procédé selon l'une quelconque des revendications 1 à 5, comprenant en outre la détermination (220) de l'étalement multitrajet du canal radio.

7. Procédé selon l'une quelconque des revendications 1 à 6, comprenant en outre la transmission (250) d'une indication des ressources dans le domaine fréquentiel allouées au ou aux dispositifs de détection.

8. Procédé selon l'une quelconque des revendications 1 à 7, dans lequel la détection sans fil comprend la détection de paquets de communication transportant des données associées au ou aux dispositifs de détection, et dans lequel l'allocation de ressources dans le domaine fréquentiel pour le ou les dispositifs de détection est en outre basée sur un besoin en ressources pour les données.

9. Procédé selon l'une quelconque des revendications 1 à 8, dans lequel les ressources dans le domaine fréquentiel sont des ressources d'accès multiple par répartition orthogonale de la fréquence.

10. Appareil d'allocation de ressources dans le domaine fréquentiel pour la détection sans fil d'un canal radio permettant de détecter des mouvements dans un environnement, dans lequel la détection sans fil est réalisée par au moins un dispositif de détection, l'appareil comprenant une circuiterie de commande (600) configurée pour provoquer :
la détermination d'une plage de fréquences de détection pour le ou les dispositifs de détection, sur la base d'un étalement multitrajet du canal radio ; et
l'allocation de ressources dans le domaine fréquentiel pour le ou les dispositifs de détection au moins en partie sur la base de la plage de fréquences de détection déterminée.

11. Appareil selon la revendication 10, dans lequel l'étalement multitrajet est paramétré sur la base d'un ou plusieurs parmi : un nombre de trajets de propagation du canal radio, une dispersivité temporelle du canal, une réponse impulsionnelle du canal, un profil de retard de puissance du canal, un étalement de retard du canal, un étalement de retard quadratique moyen du canal, une réponse fréquentielle du canal et une bande passante de cohérence du canal.

12. Appareil selon l'une quelconque des revendications 10 et 11, dans lequel la plage de fréquences de détection comprend une bande passante de détection et/ou une dispersivité de fréquence de détection.

13. Appareil selon l'une quelconque des revendications 10 à 12, dans lequel la circuiterie de commande est configurée pour provoquer l'allocation de ressources dans le domaine fréquentiel pour le ou les dispositifs de détection au moins en partie sur la base de la plage de fréquences de détection déterminée en provoquant l'allocation d'un certain nombre de ressources dans le domaine fréquentiel et/ou l'allocation d'une plage de ressources dans le domaine fréquentiel.

14. Appareil selon l'une quelconque des revendications 10 à 13, dans lequel la circuiterie de commande est configurée pour provoquer l'allocation de ressources dans le domaine fréquentiel pour le ou les dispositifs de détection au moins en partie sur la base de la plage de fréquences de détection déterminée en provoquant l'allocation de ressources dans le domaine fréquentiel contiguës ou non contiguës.

15. Appareil selon l'une quelconque des revendications 10 à 14, dans lequel la circuiterie de commande est en outre configurée pour provoquer la détermination de l'étalement multitrajet du canal radio.

16. Appareil selon l'une quelconque des revendications 10 à 15, dans lequel la détection sans fil comprend la détection de paquets de communication de détection transportant des données associées au ou aux dispositifs de détection, et dans lequel l'allocation de ressources dans le domaine fréquentiel pour le ou les dispositifs de détection est en outre basée sur un besoin en ressources pour les données.
